# EUROPÄISCHE PATENTSCHRIFT

(11) **EP 1 245 071 B1**
(45) Veröffentlichungstag und Bekanntmachung des Hinweises auf die Patenterteilung: **04.08.2004**
(21) Anmeldenummer: 00993467.0
(22) Anmeldetag: 06.12.2000
(51) Int. Cl.: H02K 15/00, H02K 15/02

(54) **VERFAHREN ZUM HERSTELLEN EINES ROTORS FÜR EINEN ELEKTROMOTOR UND WERKSTÜCKTRÄGER ZUR DURCHFÜHRUNG DES VERFAHRENS**
METHOD FOR PRODUCING A ROTOR FOR AN ELECTROMOTOR AND A WORKPIECE SUPPORT FOR CARRYING OUT SAID METHOD
PROCEDE POUR PRODUIRE UN ROTOR DESTINE A UN MOTEUR ELECTRIQUE, ET SUPPORT DE PIECES POUR METTRE EN OEUVRE LEDIT PROCEDE

(30) Priorität: 14.12.1999 DE 19960308
(43) Veröffentlichungstag der Anmeldung: 02.10.2002
(73) Patentinhaber: BSH Bosch und Siemens Hausgeräte GmbH, 81739 München (DE)
(72) Erfinder: HEHN, Hermann, 97291 Thüngersheim (DE); KATZENBERGER, Michael, 97084 Würzburg (DE); GÖPFERT, Fridolin, 97294 Unterpleichfeld (DE)
(86) Internationale Anmeldenummer: PCT/EP2000/012300
(87) Internationale Veröffentlichungsnummer: WO 2001/045234

(56) Entgegenhaltungen:
- EP-A- 0 359 293
- EP-A- 0 447 805
- EP-A- 0 821 465
- US-A- 5 348 142
- US-A- 5 685 413
- US-A- 5 735 219

## Beschreibung

Die Erfindung bezieht sich auf ein Verfahren zum Herstellen eines Rotors für einen Elektromotor aus einem eine Welle und ein auf der Welle aufgestecktes Blechpaket aufweisenden Läufer, der auf einem Werkstuckträger gelagert wird.

Bei der Herstellung eines Rotors bei einem Elektromotor wird zunachst ein Blechpaket zusammen mit einem Kommutator und Endscheiben auf eine Welle aufgedrückt, d. h. ein paketierter Läufer geschaffen, der das Ausgangsprodukt zur Herstellung eines Rotors für einen Elektromotor bildet. Es ist eine Vielzahl von Verfahrensschritten erforderlich, um aus dem paketierten Läufer den kompletten Rotor herzustellen. Hierzu ist es erforderlich, in die Nuten des Blechpakets zur Nutisolation Isoliermaterial einzufügen, in einer Wickelstation das Blechpaket mit Wickeldraht zu bewickeln, die Enden des Wickeldrahtes mit den Lamellen des Kommutators zu verlöten, anschließend die aus dem Blechpaket herausragenden Wicklungsenden an das Blechpaket bzw. an die Welle zu drücken, die noch offene Nuten mit Lamellen zu verschließen, das zum Nutverschluß dienende Material zu tranken und das Blechpaket sowie den Kommutator zu reinigen, einen Tachogenerator, Kugellager und einer Riemenscheibe aufzubringen sowie schließlich zur Gerauschminderung eine Folie um das gewickelte Blechpaket zu umwickeln. Auch Wuchtungsvorgange konnen erfoderhch sein.

Bei einem bekannten Herstellungsverfahren wird ein Werkstückträger verwendet, der eine in ihrer Mitte eine rechteckförmige Offnung aufweisende Basisplatte besitzt, auf der Aufnahmen zum Tragen der Wellenenden angeordnet sind, wobei der Abstand der Aufnahmen durch Verschiebung einer der Aufnahmen auf dem Distanzstück entsprechend der Lange der Welle des zu bewickelnden Laufers anpaßbar ist.

Aus der EP 0 359 293 A2 ist eine Produktionslinie für Bestandteile eines Elektromotors bekannt. Mit dieser Produktionslinie lässt sich eine Mehrzahl von Varianten eines besonderen Typs eines Elektromotors herstellen. Aus der EP 0 821 465 A1 sind ein Träger zur Aufnahme eines Läufers eines Elektromotors sowie ein System zum Transport der Läufer in einer Fertigungslinie bekannt.

Die Verwendung des bekannten Werkstückträgers hat den Nachteil, daß beim Wechsel zwischen verschiedenen Motortypen mit unterschiedlichen Wellenlängen durch Verschieben mindestens einer der beiden Aufnahmen auf dem Distanzstück oder durch Verstellung des Distanzstücks zusammen mit einer der Aufnahmen neu eingestellt werden muß. Dies bedeutet. daß innerhalb einer eine Vielzahl von Fertigungsschritten umfassenden Fertigungsstraße erst das Ende des Durchlaufs einer ersten Fertigungsreihe abgewartet werde muß, bis nach Veränderung des Abstands der Aufnahmen bei sämtlichen Werkstucktragern der Beginn der Fertigung einer zweiten Baureihe aufgenommen werden kann Dadurch tritt eine oft mehrstündige Fertigungspause ein, wodurch Kosten und Aufwand bei der Fertigung von Rotoren entstehen, insbesondere bei einem häufigen Wechsel zwischen verschiedenen Fertigungsreihen und Modellen.

Es ist die Aufgabe der Erfindung, das Verfahren zum Herstellen eines Rotors zu verbessern

Erfindungsgemäß wird diese Aufgabe bei einem Verfahren der eingangs genannten Art dadurch gelost, daß der Läufer zunächst mit dem Blechpaket mittels Aufnahmeblöcken auf dem Werkstucktrager gelagert wird, daß anschließend der Läufer mit Wicklungen und Isoherelementen versehen wird, daß Kugellager beidseitig des Blechpakets auf den Laufer aufgebracht werden und der Läufer dann auf die Kugellager aufnehmenden Aufnahmeelementen des Werkstückträgers gelagert wird.

Ebenso bezieht sich die Erfindung auf einen Werkstucktrager zur Aufnahme eines eine Welle und auf der Welle aufgebrachte Kugellager aufweisenden Läufers oder Rotors eines Elektromotors mittels Aufnahmeelementen, die die Welle in im wesentlichen waagrechter Lage tragen

Ein derartiger Werkstücktrager wird bei einem herkömmlichen Verfahren zum Herstellen eines Rotors für einen Elektromotor eingesetzt. Der bekannte Werkstückträger hat Aufnahmeelemente, die die Enden der Welle des Läufers aufnehmen, der mit einem Blechpaket versehen ist und aus dem der Rotors eines Elektromotors gefertigt wird. Die Aufnahmeelemente nehmen stets die Welle auf und sind an den Durchmesser der Welle angepaßt. Dies hat zur Folge, daß die Aufnahmeelemente nicht nur entsprechend der Wellenlänge des jeweils zu fertigenden Rotors angepaßt sein müssen, sondern daß die Welle auch durch den Kontakt mit den Aufnahmeelementen verkraftet werden kann, wodurch das anschließende Aufbringen der Kugellager auf die Welle im Preßsitz erschwert wird.

Es ist die Aufgabe der Erfindung, den bekannten Werkstückträger so zu verbessern, daß die Nachteile des Standes der Technik vermieden werden.

Bei einem Werkstückträger der eingangs genannten Art wird diese Aufgabe erfindungsgemaß dadurch gelöst, daß die Aufnahmeelemente zur Aufnahme von äußeren Lagerschalen von auf der Welle aufgebrachten Kugellagern angepaßt sind.

Erfindungsgemäß wird somit der Läufer oder Rotor des Elektromotors nicht mit seiner Welle auf den Aufnahmeelementen gelagert, sondern mit seinen Kugellagern. Auf diese Weise kommt die Welle nicht in Berührung mit dem Werkstückträger, so daß Beschädigungen der Welle durch den Werkstücktrager ausgeschlossen sind.

Da der Abstand der Kugellager auf der Welle des Rotors auch bei verschiedenen Fertigungsreihen von Rotoren feststeht, also unabhängig von der Länge der Welle ist, hat ein erfindungsgemaßer Werkstücktrager den Vorteil, daß die Aufnahmelemente zur Aufnahme der Kugellager stets an derselben Position vorgesehen werden und keine Anpassung an unterschiedliche Wellenlängen notwendig ist. Dadurch wird erhebliche Zeit beim Wechsel zwischen verschiedenen Fertigungsreihen eingespart. Beide Aufnahmeelemente konnen ortsfest auf dem Werkstücktrager angeordnet sein und brauchen nicht verschieblich angeordnet zu sein. Dadurch werden auch Kosten bei der Herstellung des Werkstucktragers eingespart.

In einer vorteilhaften Weiterbildung ist eine den Querschnitt der Welle des Rotors übergreifende Begrenzungsplatte vorgesehen, die ein Verschieben der Welle des auf dem Werkstucktrager aufgebrachten Rotor in einer Richtung verhindert.

Vorteilhaft ist diese Begrenzungsplatte mit einem der Aufnahmeelemente verbunden oder bildet mit diesem ein einziges Bauteil. Die Aufnahmeelemente weisen vorzugsweise zwei unter einem spitzen oder stumpfen Winkel zueinander geneigte schiefe Ebenen auf, auf die die Kugellager des Läufers oder Rotors mit ihren äußeren Lagerschalen aufgesetzt werden Vorteilhaft ist eine Ausführungsform, bei der die schiefen Ebenen einen Winkel von 90° miteinander bilden.

In vorteilhafter Weise kann der Werkstückträger Aufnahmeblöcke zur mantelseitigen Aufnahme eines auf dem Läufer aufgebrachten Blechpakets aufweisen.

Besonders vorteilhaft ist, wenn die Aufnahmeblöcke in Bezug zu den Aufnahmeelementen zur Aufnahme der Kugellager so dimensioniert sind, daß der Läufer nach Aufbringen der Kugellager über deren Lagerschalen auf den Lagerelementen liegt, weil nach dem Aufbringen der Kugellager die Mantelfläche des Blechpakets mit einer Folie ummantelt wird, die durch Kontakt mit den Aufnahmeblocken beschädigt werden konnte. Dies wird erfindungsgemäß wirksam verhindert, indem die die Mantelflächen der Lagerschalen der Kugellager aufnehmenden Flächen der Aufnahmeelemente so zu einander geneigt sind und in ihrer Hohe so angeordnet sind, daß der Laufer gegenüber seiner vorherigen Position angehoben wird, wozu durch die Durchmesserzunahme des Laufers im Bereich der nun aufgebrachten Kugellager ein gewisser Spielraum vorhanden ist, der sich durch die Differenz zwischen dem Außenradius des Kugellagers und dem Radius der Welle ergibt.

Vorteilhafte Weiterbildungen ergeben sich aus den Unteranspruchen

Nachstehend wird die Erfindung in einem Ausfuhrungsbeispiel anhand der Zeichnungen näher erläutert. Es zeigen:
- Fig. 1: eine Draufsicht auf einen Werkstücktrager und
- Fig. 2: eine Seitenansicht des Werkstückträgers gemäß Fig. 1, auf den ein Läufer oder Rotor eines Elektromotors aufge-. legt ist, teilweise geschnitten.

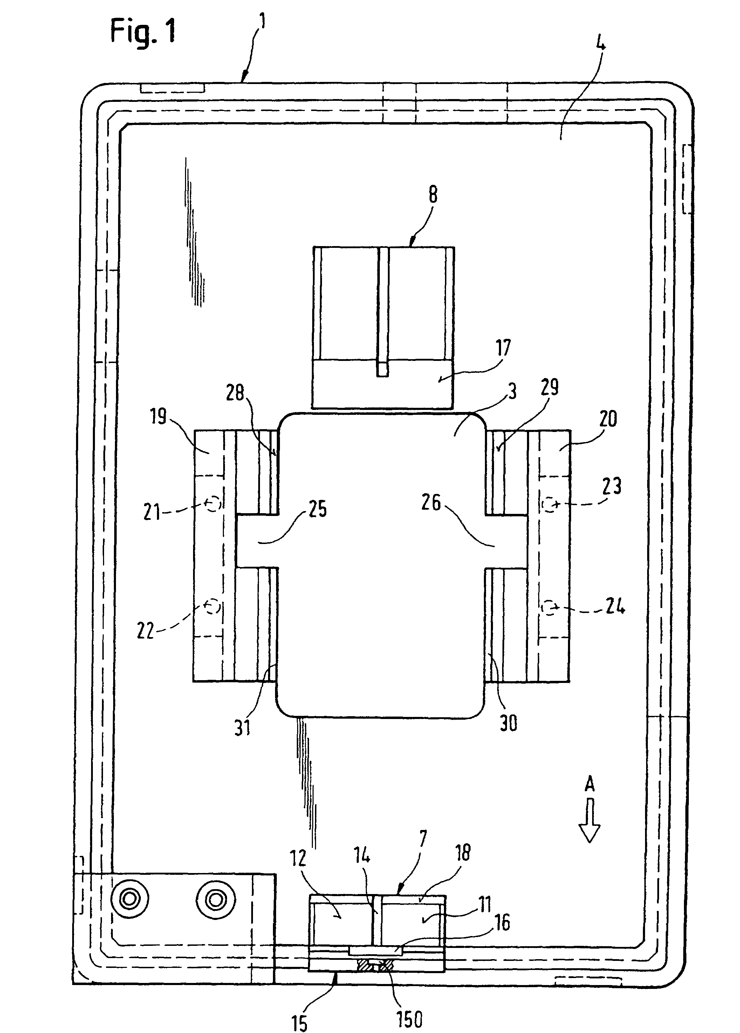

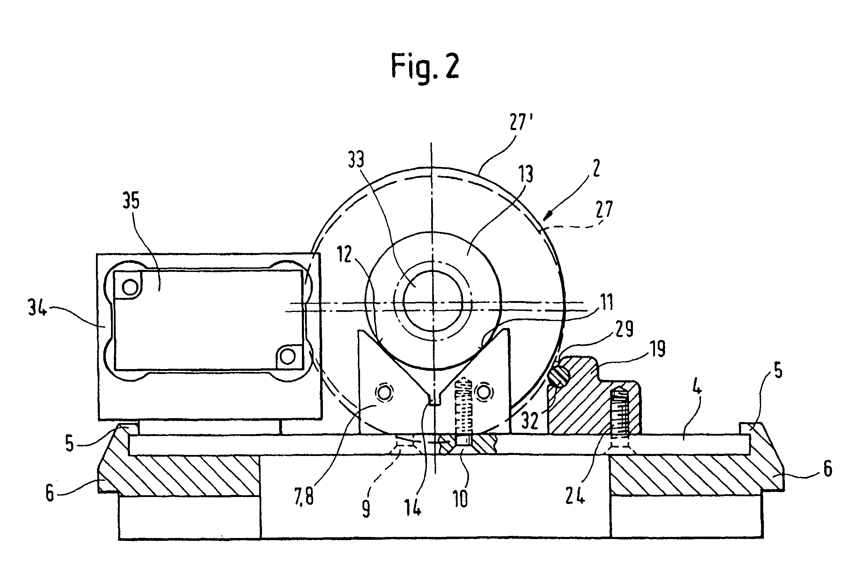

Ein Werkstucktrager 1 (Fig. 1, 2) dient zur Aufnahme eines Laufers oder Rotors 2 (Fig 2) Der Werkstuckträger 1 weist eine im wesentlichen rechteckförmige Öffnung 3 in einer Tragerplatte 4 auf Die Tragerplatte 4 liegt auf unterhalb der Trägerplatte 4 zu den Aussenkanten der Trägerplatte hin angeordneten und nach oben sowie zur Mitte der Trägerplatte 4 hinweisende Uberkragungen 5 aufweisenden Tragteilen 6 auf. Die Tragteile 6 sind beispielsweise mit der Tragerplatte 4 verschraubt, verschweißt, verlotet oder auf sonstige Weise mit ihr verbunden, sofern sie wie die Trägerplatte 4 aus Stahl oder einem anderen Metall bestehen. Auch andere Materialien sind für die Tragerplatte 4 sowie die Tragteile 6 ersetzbar.

In Langsrichtung der Trägerplatte 4 fluchtend zueinander angeordnete Aufnahmeelemente 7, 8 sind vorzugsweise mittels Schrauben 9, 10 mit der Trägerplatte 4 verbunden. Vorzugsweise sind in der Trägerplatte 4 Langlöcher vorgesehen, die ein Verschieben der Aufnahmeelemente 7, 8 in beiden Richtungen auf der von der Trägerplatte 4 gebildeten Ebene erlauben

Die Aufnahmeelemente 7, 8 weisen geneigte Flächen 11. 12 auf, auf denen eine äußere Lagerschale eines Kugellagers 13 mit ihrer äußeren Mantelfläche auflegbar ist. Die Neigung der Flächen 11, 12 zueinander betragt beispielsweise 90°; in Betracht kommen jedoch auch andere stumpfe oder spitze Winkel. Zwischen den Flachen 11, 12 ist vorzugsweise eine Rinne 14 vorgesehen, durch die die Anordnung der Flächen 11, 12 zueinander unter einem stumpfen oder spitzen Winkel bei ihrer Herstellung erleichtert wird

An einem der Aufnahmeelemente 7, 8 ist eine Begrenzungsplatte 15 mit einer Schranke 150 befestigt, die ein Verschieben des Laufers 2, nachdem dieser auf dem Werkstucktrager 1 aufgebracht worden ist, in Richtung A verhindert Die Begrenzungsplatte 15 weist vorzugsweise eine entgegen der Richtung A zu der Oberfläche des Werkstücktragers hin geneigte Flache 16 auf ihrer Oberseite auf, die bewirkt, daß der Läufer 2 über die Flache 16 nach unten auf die Flachen 11, 12 gleitet. In einer anderen Ausführungsform bildet die Begrenzungsplatte 15 mit dem Aufnahmeelement ein einziges Bauteil.

Auch die Aufnahmeelemente 7, 8 weisen jeweils zur Mitte der Trägerplatte 4 hin abfallende geneigte Fläche 17, 18 auf. Durch die Neigung der Flache 17 wird verhindert, daß die aus dem Blechpaket 27 des Rotors 2 an dessen Stirnseite heraus geführten Wicklungen auf der Fläche 17 zum Aufliegen kommen. Durch die Fläche 18 wird erreicht, daß sich der Rotor 2 leicht mit seinem Kugellager 13 auf den Flächen 11, 12 ablegen läßt

Zusatzlich zu den Aufnahmeelementen 7, 8 sind auf der Trägerplatte 4 Aufnahmeblöcke 19, 20 vorgesehen, die über Schrauben 21, 22, 23, 24 mit der Tragerplatte 4 verbunden sind, vorzugsweise über Langlöcher, die eine Verschiebbarkeit der Aufnahmeblöcke 19, 20 in beiden Richtungen auf der von der Oberfläche der Trägerplatte 4 gebildeten Ebene erlauben. Die Aufnahmeblöcke 19, 20 sind an den Längsseiten der Offnung 3 angeordnet und weisen jeweils eine zu der Offnung 3 hinweisende Ausnehmung 25 bzw. 26 auf, die sich in der Trägerplatte 4 fortsetzen, so daß die Öffnung 3 beidseitige Vorsprünge hat, die dazu dienen, daß Greifarme eines Manipulators (hier nicht dargestellt) ein Blechpaket 27 des Laufers 2 von der Oberseite des Werkstückträgers 1 kommend auch von der Unterseite des Blechpakets 27 her greifen können.

Die Aufnahmeblöcke 19, 20 weisen zur Öffnung 3 hin geneigte Flächen 28, 29 auf, in die sich in Langsrichtung des Werkstückträgers 1, d. h. parallel zu den Langsseiten der Öffnung 3 erstreckende, jeweils einen im wesentlichen kreissegmentförmigen Querschnitt aufweisende Nuten 30, 31 angeordnet sind, die elastisch federnde, einen im wesentlichen kreisförmigen Querschnitt aufweisende Bänder 32 aus Kunststoff, Gummi oder dergleichen angeordnet sind. Die Bander 32 ragen in Richtung zu der Offnung 3 auf den geneigten Flächen 28, 29 heraus und tragen das Blechpaket 27 (strichlierte Linie in Fig. 2), solange der Läufer 2 noch nicht mit den Kugellagern 13 versehen ist. Dadurch wird eine Welle 33 des Läufers 2 vor Beschädigungen geschützt. Die Welle 33 liegt nicht auf den Aufnahmeelementen 7, 8 auf, sondern verläuft oberhalb der Aufnahmeelemente 7, 8

Erst nachdem das Blechpaket 27 bewickelt und mit isolierenden Elementen versehen worden ist, werden auf die Welle 33 die Kugellager 13 aufgebracht, die unabhängig von der zu fertigenden Baureihe der Rotoren 2 stets denselben Abstand haben oder wenigstens innerhalb einer geringen Bandbreite von Abstanden liegen, die noch von der Breite der Aufnahmeelemente 7, 8 aufnehmbar sind, so daß der Rotor 2 auf den geneigten Flächen 11, 12 der Aufnahmeelemente zu liegen kommt (durchgehende Linie in Fig. 2) und eine Position 27' einnimmt, in der er die Aufnahmeblocke 19, 2 und insbesondere die in diese eingebrachte Bander 32 nicht mehr berührt

Dadurch läßt sich der Rotor 2 handhaben, ohne daß eine beispielsweise auf die Mantelflache des Blechpakets 27 aufgebrachte Folie durch das Zusammenwirken mit den Bandern 32 beschädigt wird.

Erfindungsgemaß wird gewährleistet, daß der Läufer 3 oder der Rotor in allen Phasen der Fertigung schonend behandelt werden kann und daß ein von der Länge der Welle 33 abhangiges Verschieben von Aufnahmeelementen vermieden wird

Zusätzlich ist auf dem Werkstucktrager 1 ein Tragkorper 34 zur Aufnahme eines Sendeoder Empfangselements 35 vorgesehen. Diesem wird beispielsweise während des Fertigungsvorgangs der jeweilige Fertigungszustand des Läufers 2 mitgeteilt, so daß es, wenn der Werkstucktrager 1 an einer nachfolgenden Fertigungsstation anlangt, diese Informationen an das dort vorgesehene Fertigungsgerat weitergibt. Das Sende- und Empfangselement ist beispielsweise ein aktiver Transponder.

## Patentansprüche

1. Verfahren zum Herstellen eines Rotors (2) für einen Elektromotor aus einem eine Welle (33) und ein auf der Welle (33) aufgebrachtes Blechpaket (27) aufweisenden Läufer (2), der auf einem Werkstückträger (1) gelagert wird, **dadurch gekennzeichnet, daß** der Laufer (2) zunachst mit dem Blechpaket 27) mittels Aufnahmeblöcken (19. 20) auf dem Werkstückträger (1) gelagert wird, daß anschliessend der Läufer (2) mit Wicklungen und Isolierelementen versehen wird, daß Kugellager (13) beidseitig des Blechpakets (27) auf dem Laufer (2) aufgebracht werden und der Läufer (2) dann auf die Kugellager (13) aufnehmenden Aufnahmeelementen (7, 8) des Werkstückträgers (1) gelagert wird.

2. Werkstücktrager (1) zur Aufnahme eines eine Welle (33) und auf der Welle (33) aufgebrachte Kugellager (13) aufweisenden Läufers (2) oder Rotors eines Elektromotors mittels Aufnahmeelementen (7, 8), die die Welle (33) in im wesentlichen waagrechter Lage getragen, **dadurch gekennzeichnet, daß** die Aufnahmeelemente (7, 8) zur Aufnahme von äußeren Lagerschalen von auf der Welle aufgebrachten Kugellagern (32) angepaßt sind.

3. Werkstucktrager (1) nach Anspruch 2, **dadurch gekennzeichnet, daß** mindestens eine den Querschnitt der Welle (33) übergreifende Begrenzungsplatte (15) auf dem Werkstuckträger (1) angeordnet ist, die ein Verschieben der Welle (33) des von dem Werkstucktragers (1) mittels der Aufnahmeelemente (7, 8) aufgenommenen Laufers (2) verhindert.

4. Werkstücktrager (2) nach Anspruch 3, **dadurch gekennzeichnet, daß** die Begrenzungsplatte (15) mit einem der Aufnahmeelemente (7, 8) verbunden ist oder mit diesem ein einziges Bauteil bildet.

5. Werkstücktrager (1) nach einem der Ansprüche 2 bis 4, **dadurch gekennzeichnet, daß** die Aufnahmeelemente (7, 8) in Quer- und/oder Längsrichtung auf einer Trägerplatte (4) des Werkstücktragers (1) verschieblich ausgebildet sind.

6. Werkstucktrager (1) nach einem der Anspruche 2 bis 5, **dadurch gekennzeichnet, daß** die Aufnahmeelemente (7, 8) zu der Trägerfläche (4) geneigte Flächen (11, 12) aufweisen.

7. Werkstucktrager (1) nach Anspruch 6, **dadurch gekennzeichnet, daß** die Flachen (11 12) unter einem Winkel von 90° zueinander geneigt sind.

8. Werkstückträger (1) nach einem der Ansprüche 2 bis 7, **dadurch gekennzeichnet, daß** er Aufnahmeblöcke (19, 20) zur Aufnahme eines auf der Welle (33) aufgebrachten Blechpakets (27) des Läufers (2) aufweist.

9. Werkstucktrager (1) nach Anspruch 7, **dadurch gekennzeichnet, daß** die Aufnahmeblocke (19. 20) parallel zu den Langsseiten einer in der Tragerplatte (4) angebrachten Öffnung (3) angeordnet sind.

10. Werkstucktrager (1) nach Anspruch 6 oder 7, **dadurch gekennzeichnet, daß** die Aufnahmeblocke (19, 20) zu der Öffnung (3) hinweisende Ausnehmungen (25, 26) haben

11. Werkstucktrager (1) nach einem der Ansprüche 6 bis 8, **dadurch gekennzeichnet, daß** die Aufnahmeblöcke (19, 20) zu der Öffnung (3) hin geneigte Flächen (16, 17) haben

12. Werkstucktrager (1) nach Anspruch 8 oder 9, **dadurch gekennzeichnet, daß** in den Aufnahmeblöcken (19, 20) jeweils eine Nut (30, 31) zur Aufnahme eines Bandes (32) aus einem elastisch federnden Material vorgesehen ist, welches aus den Aufnahmeblöcken und oben und/oder zu der Öffnung (3) hin herausragt.

13. Werkstückträger (1) nach Anspruch 12, **dadurch gekennzeichnet, daß** das elastisch federnde Material ein Kunststoff ist

14. Werkstucktrager (1) nach Anspruch 12 oder 13, **dadurch gekennzeichnet, daß** die Bander (32) einen kreisförmigen Querschnitt haben.

15. Werkstücktrager (1) nach einem der Anspruche 8 bis 12, **dadurch gekennzeichnet, daß** die Aufnahmeblöcke (19, 20) in Quer- und/oder Langsnchtung des Werkstucktragers (1) verschieblich angeordnet sind.

## Claims

1. Method of producing a rotor (2) for an electric motor consisting of a shaft (33) and an armature (2), which has a lamination stack (27) mounted on the shaft (33) and which is mounted on a workpiece support (1), **characterised in that** the armature (2) is initially mounted by the lamination stack (27) on the workpiece support (1) by means of receiving blocks (19, 20), that subsequently the armature (2) is provided with windings and insulating elements, that ball bearings (13) are mounted on the armature (2) at both sides of the lamination stack (27) and the armature (2) is then mounted on receiving elements (7, 8), which receive the ball bearings (13), of the workpiece support (1).

2. Workpiece support (1) for receiving an armature (2) or a rotor, which comprises a shaft (33) and ball bearings (13) mounted on the shaft (33), of an electric motor by means of receiving elements (7, 8), which support the shaft (33) in substantially horizontal position, **characterised in that** the receiving elements (7, 8) are adapted for reception of outer bearing shells of ball bearings (32) mounted on the shaft.

3. Workpiece support (1) according to claim 2, **characterised in that** at least one limiter plate (15) engaging over the cross-section of the shaft (33) is arranged on the workpiece support (1) and prevents displacement of the shaft (33) of the armature (2) received by the workpiece support (1) by means of the receiving elements (7, 8).

4. Workpiece support (2) according to claim 3, **characterised in that** the limiter plate (15) is connected with one of the receiving elements (7, 8) or forms a single component therewith.

5. Workpiece support (1) according to one of claims 2 to 4, **characterised in that** the receiving elements (7, 8) are constructed to be displaceable on a support plate (4) of the workpiece support (1) in transverse and/or longitudinal direction.

6. Workpiece support (1) according to one of claims 2 to 5, **characterised in that** the receiving elements (7, 8) have surfaces (11, 12) inclined relative to the support surface (4).

7. Workpiece support (1) according to claim 6, **characterised in that** the surfaces (11, 12) are inclined at an angle of 90° relative to one another.

8. Workpiece support (1) according to one of claims 2 to 7, **characterised in that** it comprises receiving blocks (19, 20) for reception of a lamination stack (27), which is mounted on the shaft (33), of the rotor (2).

9. Workpiece support (1) according to claim 7, **characterised in that** the receiving blocks (19, 20) are arranged parallel to the longitudinal sides of an opening (3) formed in the support plate (4).

10. Workpiece support (1) according to claim 6 or 7, **characterised in that** the receiving blocks (19, 20) have recesses (25, 26) facing towards the opening (3).

11. Workpiece support (1) according to one of claims 6 to 8, **characterised in that** the receiving blocks (19, 20) have surfaces (16, 17) inclined towards the opening (3).

12. Workpiece support (1) according to claim 8 or 9, **characterised in that** a respective groove (30, 31) for reception of a strip (32) of an elastically resilient material is provided in each of the receiving blocks (19, 20), which material protrudes out of the receiving blocks and upwardly and/or towards the opening (3).

13. Workpiece support (1) according to claim 12, **characterised in that** the elastically resilient material is a plastics material.

14. Workpiece support (1) according to claim 12 or 13, **characterised in that** the strips (32) have a circular cross-section.

15. Workpiece support (1) according to one of claims 8 to 12, **characterised in that** the receiving blocks (19, 20) are arranged to be displaceable in transverse and/or longitudinal direction of the workpiece support (1).

## Revendications

1. Procédé de fabrication d'un rotor (2) destiné à un moteur électrique, à partir d'un induit (2), muni d'un arbre (33) et d'un paquet de tôle (27) rapporté sur l'arbre (33), qui est logé sur un porte-pièce (1), **caractérisé en ce que** l'induit (2) est d'abord logé avec le paquet de tôle (27) sur le porte-pièce (1), à l'aide de blocs de réception (19, 20), que l'induit (2) est ensuite muni d'enroulements et d'éléments isolants, que des roulements à billes (13) sont rapportés sur l'induit (2), des deux côtés du paquet de tôle (27) et que l'induit (2) est ensuite logé sur les éléments de réception (7, 8) du porte-pièce (1) recevant les roulements à billes (13).

2. Porte-pièce (1) destiné à recevoir un induit (2) ou un rotor d'un moteur électrique muni d'un arbre (33) et de roulements à billes (13) rapportés sur l'arbre (33), à l'aide d'éléments de réception (7, 8) portant l'arbre en position sensiblement horizontale, **caractérisé en ce que** les éléments de réception (7, 8) sont ajustés pour loger des coussinets externes de roulements à billes (32) rapportés sur l'arbre.

3. Porte-pièce (1) selon la revendication 2, **caractérisé en ce qu'**au moins une plaque de délimitation (15) débordant de la section transversale de l'arbre (33) et évitant un déplacement de l'arbre (33) de l'induit (2) logé sur le porte-pièce (1) à l'aide des éléments de réception (7, 8) est disposée sur le porte-pièce (1).

4. Porte-pièce (1) selon la revendication 3, **caractérisé en ce que** la plaque de délimitation (15) est reliée à l'un des éléments de réception (7, 8) ou forme un seul élément avec ce dernier.

5. Porte-pièce (1) selon l'une quelconque des revendications 2 à 4, **caractérisé en ce que** les éléments de réception (7, 8) sont conçus de façon déplaçable en direction transversale et/ou en direction longitudinale sur une plaque support (4) du porte-pièce (1).

6. Porte-pièce (1) selon l'une quelconque des revendications 2 à 5, **caractérisé en ce que** les éléments de réception (7, 8) présentent des surfaces inclinées (11, 12) vers la surface de support (4).

7. Porte-pièce (1) selon la revendication 6, **caractérisé en ce que** les surfaces (11, 12) sont inclinées l'une vers l'autre sous un angle de 90°.

8. Porte-pièce (1) selon l'une quelconque des revendications 2 à 7, **caractérisé en ce qu'**il est muni de blocs de réception (19, 20) pour recevoir un paquet de tôle (27) de l'induit (2) qui est rapporté sur l'arbre (33).

9. Porte-pièce (1) selon la revendication 7, **caractérisé en ce que** les blocs de réception (19, 20) sont disposés en parallèle des côtés longitudinaux d'une ouverture (3) ménagée dans la plaque support (4).

10. Porte-pièce (1) selon l'une quelconque des revendications 6 ou 7, **caractérisé en ce que** les blocs de réception (19, 20) sont munis d'évidements (25, 26) dirigés vers l'ouverture (3).

11. Porte-pièce (1) selon l'une quelconque des revendications 6 à 8, **caractérisé en ce que** les blocs de réception (19, 20) sont munis de surfaces (16, 17) inclinées vers l'ouverture (3).

12. Porte-pièce (1) selon l'une quelconque des revendications 8 ou 9, **caractérisé en ce qu'**une rainure (30, 31) est prévue respectivement dans les blocs de réception (19, 20) pour loger une bande (32) en matériau résilient élastique qui saillit hors des blocs de réception et vers le haut et/ou en direction de l'ouverture (3).

13. Porte-pièce (1) selon la revendication 12, **caractérisé en ce que** le matériau résilient élastique est une matière plastique.

14. Porte-pièce (1) selon l'une quelconque des revendications 12 ou 13, **caractérisé en ce que** les bandes (32) ont une section transversale circulaire.

15. Porte-pièce (1) selon l'une quelconque des revendications 8 à 12, **caractérisé en ce que** les blocs de réception (19, 20) sont disposés de façon déplaçable en direction transversale et/ou longitudinale du porte-pièce (1).
